# EUROPÄISCHE PATENTSCHRIFT

(11) **EP 0 552 183 B1**
(45) Veröffentlichungstag und Bekanntmachung des Hinweises auf die Patenterteilung: **11.01.1995**
(21) Anmeldenummer: 91916969.8
(22) Anmeldetag: 02.10.1991
(51) Int. Cl.: G01N 21/37

(54) **PNEUMATISCHER ZWEISCHICHTDETEKTOR FÜR NDIR-GASANALYSATOREN**
PNEUMATIC TWIN-LAYER DETECTOR FOR NDIR GAS ANALYSERS
DETECTEUR PNEUMATIQUE A DOUBLE COUCHE POUR ANALYSEURS DE GAZ A INFRA-ROUGES NON DISPERSIFS

(30) Priorität: 11.10.1990 DE 9014162 U
(43) Veröffentlichungstag der Anmeldung: 28.07.1993
(73) Patentinhaber: SIEMENS AKTIENGESELLSCHAFT, 80333 München (DE)
(72) Erfinder: WEINEL, Johann, D-7500 Karlsruhe (DE)
(86) Internationale Anmeldenummer: DE9100776
(87) Internationale Veröffentlichungsnummer: WO9207247

(56) Entgegenhaltungen:
- EP-A- 0 213 304
- DE-A- 2 638 522
- DE-A- 2 702 978
- DE-B- 1 017 385
- FR-A- 2 127 853

## Beschreibung

Die Erfindung bezieht sich auf einen pneumatischen Zweischicht detektor für NDIR-Gasanalysatoren mit zwei koaxial angeordneten gasgefüllten Kammern mit strahldurchlässigen Stirnflächen, einer die Kammern verbindenden Leitung, einem in der Leitung angeordneten Druck- oder Strömungsfühler eines pneumatischelektrischen Wandlers (siehe DE-A-2702978).

Derartige Detektoren werden in Gasanalysatoren eingesetzt, bei denen eine modulierte Infrarot-Strahlung durch eine mit dem Meßgas gefüllte Küvette in den Detektor fällt. Das Meßgas ist in der Regel ein Gasgemisch, von dem eine oder mehrere Komponenten zu bestimmen sind, die zu bestimmende Komponente oder ein Gas mit gleichartigem Absorptionsverhalten für IR-Strahlung bildet die Gasfüllung der Detektorkammern (siehe z. B. DE-PS 1 017 385).
Verfälschungen des Meßsignals treten durch die sogenannte Querempfindlichkeit auf, das sind Uberlappungen der Absorptionsbanden von anderen im Meßgas enthaltenen Komponenten mit der der zu messenden Komponente. Eine Verbesserung der Selektivität wird bereits durch die bekannte Zweischicht-Detektoranordnung erreicht, bei der die beiden Kammern pneumatisch gegeneinander geschaltet sind. Dadurch wird eine Herabsetzung der Empfindlichkeit gegen alle Störkomponenten erreicht. Es besteht jedoch keine Möglichkeit, eine der Störkomponenten auf Null zu kompensieren.

Mit einem pneumatischen Zweischicht-Detektor, der die in den Ansprüchen angegebenen Merkmale aufweist, läßt sich die Aufgabe lösen, neben der Herabsetzung der Empfindlichkeit gegenüber Störkomponenten eine dieser Störkomponenten gezielt auf Null zu kompensieren, und zwar auf elektrische Weise durch Schwächung des Signals aus dem zweiten pneumatisch-elektrischen Wandler vor der Differenzbildung. Der Detektor ist damit für dieses Störgas unempfindlich geworden.

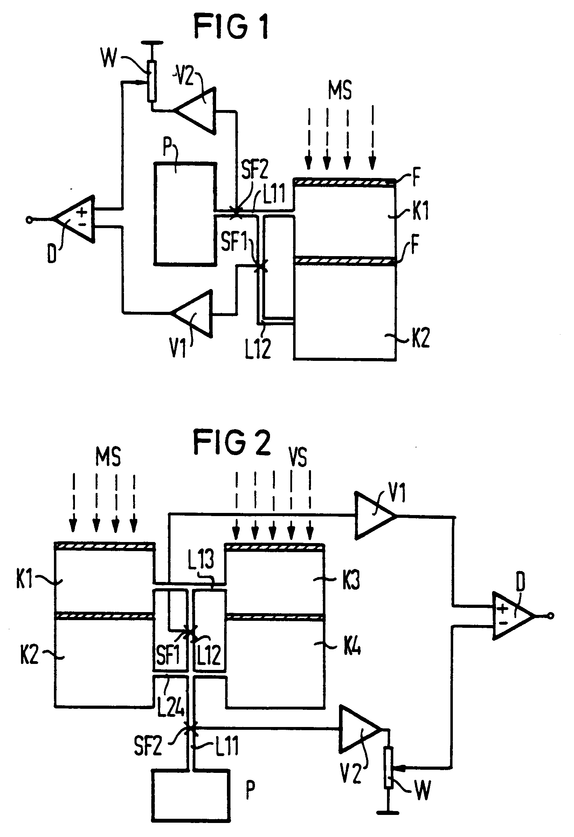

Zur Erläuterung der Erfindung ist in der Figur 1 ein Ausführungsbeispiel schematisch dargestellt.
Figur 2 zeigt eine Zweistrahlausführung eines NDIR-Gasanalysators mit den erfindungsgemäßen Detektoren.

Figur 1: Der Zweischichtdetektor weist zwei koaxial hintereinander angeordnete Kammern K1 und K2 auf, deren Stirnflächen mit Strahlungsdurchlässigen Fenstern F versehen sind. Die Kammern K1 und K2 sind mit dem zu detektierenden Gas oder einem anderen Gas mit gleichartigem Absorptionsvermögen gefüllt. Durch die Fenster F fällt modulierte Strahlung aus dem Meßstrahlengang MS in die Kammern K1 und K2. Die Strahlungsenergie wird von dem darin befindlichen Gas absorbiert, führt zur Erwärmung und damit zur Druckerhöhung. In einer die Kammern K1 und K2 verbindenden Leitung L12 ist ein erster, nach dem Anemometerprinzip arbeitender Strömungsfühler SF1 angeordnet, der Teil eines pneumatisch-elektrischen Wandlers mit dem Verstärker V1 ist.

Mit der ersten Kammer K1 ist über die Verbindungsleitung L11 ein Puffervolumen P verbunden, mit einem zweiten Strömungsfühler SF2, der Teil eines pneumatisch-elektrischen Wandlers mit dem Verstärker V2 ist. Die Verstärkung und damit die Höhe des Ausgangssignals des Verstärkers V2 läßt sich über ein Potentiometer W einstellen. Die Ausgangssignale der Verstärker V1 und V2 sind einem Differenzglied D zugeführt, an dessen Ausgang ein Meßsignal auftritt, das von den Einflüssen der störenden Komponenten des Meßgasgemischs durch die pneumatische Differenzschaltung der Kammern weitgehend und für ein bestimmtes Störgas durch die elektrische Differenzbildung völlig befreit ist.

Figur 2 zeigt die Verwendung eines erfindungsgemäßen Detektors bei einem NDIR-Analysegerät nach dem Zweistrahl-Prinzip mit je zwei im Meßstrahlengang MS und zwei im Vergleichsstrahlengang VS jeweils koaxial angeordneten Kammern K1, K2 und K3, K4. Die Kammern K1 und K3 sind über die Leitung L13, die Kammern K2 und K4 über die Leitung L24 miteinander verbunden. In der zwischen den Leitungen L13 und 24 liegenden Querverbindung L12 ist ein erster Strömungsfühler SF1 als Teil eines Wandlers mit dem Verstärker V1 angeordnet.

An die Leitung L24 ist eine Verbindungsleitung L11 angeschlossen, die zu dem Puffervolumen P führt. Der in dieser Leitung L11 angeordnete zweite Strömungsfühler SF2 ist Teil eines zweiten pneumatisch-elektrischen Wandler mit dem Verstärker V2 einstellbarer Verstärkung. Die Ausgangssignale der Verstärker V1 und V2 sind - wie bereits beschrieben - einem Differenzglied D zugeführt.

Je nach Anwendungsfall kann in einer Einstrahl-Ausführung nach Figur 1 auch wahlweise die Kammer K2 über eine den zweiten Strömungsfühler SF2 enthaltenden Leitung an das Puffervolumen P angeschlossen sein. Entsprechend kann in der in Figur 2 dargestellten Ausführung für ein Zweistrahlgerät das Puffervolumen P und damit der zweite Strömungsfühler SF2 an die die Kammern K1 und K3 verbindende Leitung L13 angeschlossen sein.

## Patentansprüche

1. Pneumatischer Zweischichtdetektor für nichtdispersive Infrarot-Gasanalysatoren mit
- zwei koaxial angeordneten gasgefüllten Kammern (K1, K2) mit strahldurchlässigen Stirnflächen,
- einer die Kammern verbindenden Leitung (L12),
- einem in der die Kammern verbindenden Leitung (L12) angeordneten Druck- oder Strömungsfühler (SF1) als Teil eines pneumatisch-elektrischen Wandlers (V1),
**gekennzeichnet durch**
- ein mit einer der Kammern (K1, K2) gasleitend verbundenes Puffervolumen (P),
- einen in der die Kammer (K1; K2) mit dem Puffervolumen (P) verbindenden Leitung (L11) angeordneten zweiten Druck- oder Strömungsfühler (SF2) als Teil eines zweiten pneumatischelektrischen Wandlers mit einstellbarer Verstärkung,
- ein an die Ausgänge der Wandler (SF1,V1; SF2, V2) angeschlossenes Differenzglied (D).

2. Pneumatischer Zweischichtdetektor für nichtdispersive Infrarot-Gasanalysatoren nach dem Zweistrahlprinzip
- mit je zwei im Meßstrahlengang (MS) und im Vergleichsstrahlengang (VS) koaxial anzuordnenden gasgefüllten Kammern (K1, K2 bzw. K3, K4) mit strahlungsdurchlässigen Stirnflächen,
- einer die ersten Kammern (K1, K3) verbindenden Leitung L13),
- einer die zweiten Kammern (K2, K4) verbindenden Leitung (L24),
- einer gasleitenden Querverbindung (L12) zwischen der Leitung (L13) und der Leitung (L24),
- einem in der Querverbindung (L12) angeordneten ersten Druck- oder Strömungsfühler (SF1) als Teil eines pneumatisch-elektrischen Wandlers (V1),
**gekennzeichnet durch**
- eine die erste Leitung (L13) oder die zweite Leitung (L24) mit einem Puffervolumen (P) verbindenden dritten Leitung (L11) mit einem zweiten Druck- oder Strömungsfühler (SF2) als Teil eines zweiten pneumatisch-elektrischen Wandlers mit einstellbarer Verstärkung (V2, W),
- ein an die Ausgänge der Wandler (V1, V2) angeschlossenes Differenzglied (D).

## Claims

1. Pneumatic two-layer detector for nondispersive infrared gas analysers having
- two coaxially disposed gas-filled chambers (K1, K2) having radiation-transparent front faces,
- a line (L12) connecting the chambers,
- a pressure or flow sensor (SF1) disposed in the line (L12) connecting the chambers as part of a pneumo-electrical transducer (V1),
characterized by
- a buffer volume (P) connected in a gas conducting manner to one of the chambers (K1, K2),
- a second pressure or flow sensor (SF2) disposed in the line (L11) connecting the chamber (K1; K2) to the buffer volume (P) as part of a second pneumo-electrical transducer having adjustable gain,
- a differential element (D) connected to the outputs of the transducers (SF1, V1; SF2, V2).

2. Pneumatic two-layer detector for nondispersive infrared gas analysers employing the two-beam principle having
- in each case two gas-filled chambers (K1, K2 and K3, K4, respectively) disposed coaxially in the test beam path (MS) and in the reference beam path (VS) and having radiation-transparent front faces,
- a line (L13) connecting the first chambers (K1, K3),
- a line (L24) connecting the second chambers (K2, K4),
- a gas-conducting cross-connection (L12) between the line (L13) and the line (L24),
- a first pressure or flow sensor (SF1) disposed in the cross-connection (L12) as part of a pneumo-electrical transducer (V1),
characterized by
- a third line (L11) connecting the first line (L13) or the second line (L24) to a buffer volume (P) and having a second pressure or flow sensor (SF2) as part of a second pneumo-electrical transducer having adjustable gain (V2, W),
- a differential element (D) connected to the outputs of the transducers (V1, V2).

## Revendications

1. Détecteur pneumatique à deux couches pour des analyseurs de gaz à infrarouge non dispersifs, comportant
- deux chambres (K1,K2) disposées coaxialement, remplies par un gaz et possédant des surfaces frontales transparentes pour le rayonnement,
- une canalisation (L12) reliant les chambres,
- un capteur de pression ou d'écoulement (SF1) disposé dans la canalisation (L12) reliant les chambres et agencé en tant que partie d'un transducteur pneumatique/électrique (V1),
caractérisé par
- un volume tampon (P) relié, selon une liaison de transmission du gaz, à l'une des chambres (K1,K2),
- un second capteur de pression ou d'écoulement (SF2), disposé dans la canalisation (L11) qui relie les chambres (K1;K2) au volume tampon (P) et faisant partie d'un second transducteur pneumatique/électrique à amplification réglable,
- un circuit de formation de différence (D), raccordé aux sorties des transducteurs (SF1, V1; SF2, V2).

2. Détecteur pneumatique à deux couches pour des analyseurs de gaz à infrarouge non dispersifs, fonctionnant selon le principe à deux faisceaux, comportant
- respectivement deux chambres (K1, K2 ou K3, K4) remplies par un gaz, qui doivent être disposées coaxialement dans le trajet du faisceau de mesure (MS) et dans le trajet du faisceau de comparaison (VS) et possèdent des surfaces frontales transparentes pour le rayonnement,
- une canalisation (L13) qui relie les premières chambres (K1,K3),
- une canalisation (L24) qui relie les secondes chambres (K2,K4),
- une liaison transversale (L12), qui transmet le gaz, entre la canalisation (L13) et la canalisation (L24),
- un premier capteur de pression ou d'écoulement (SF1), qui est disposé dans la liaison transversale (L12) et fait partie d'un transducteur pneumatique-électrique (V1),
caractérisé par
- une troisième canalisation (L11), qui relie la première canalisation (L13) ou la seconde canalisation (L24) à un volume tampon (P) et qui comporte un second capteur de pression ou d'écoulement (SF2) faisant partie d'un second transducteur pneumatique-diélectrique à amplification réglable (V2, W), et
- un circuit de formation de différence (D) raccordé aux sorties des transducteurs (V1,V2).
